# EUROPEAN PATENT APPLICATION

(11) **EP 4 817 895 A1**
(43) Date of publication of application: **07.10.2026**
(21) Application number: 24895939.7
(22) Date of filing: 24.09.2024
(51) Int. Cl.: B60C 23/04

(54) **TIRE CONDITION MONITORING METHOD AND TIRE CONDITION DETECTION APPARATUS**

(30) Priority: 29.11.2023 CN 202311619864
(71) Applicant: Baolong Huf Shanghai Electronic Co., Ltd., Shanghai 201619 (CN)
(72) Inventor: TIAN, Lei, Shanghai 201619 (CN); ZHANG, Fangwei, Shanghai 201619 (CN); LIU, Zhendong, Shanghai 201619 (CN); CHEN, Wei, Shanghai 201619 (CN)
(74) Representative: Hoffmann Eitle
(86) International application number: PCT/CN2024/120577
(87) International publication number: WO 2025/112842

(57) **Abstract**

The present application relates to a tire condition monitoring method and tire condition detection apparatus. The tire condition monitoring method comprising: in an operation state, setting the sampling period of a tire condition detection apparatus to be T1 and the sending period of the tire condition detection apparatus to be T2; on the basis of a change of tire pressure sampling values, determining whether a first set condition is satisfied; and if the first set condition is satisfied, the tire condition detection apparatus entering a tire burst monitoring state; and, in the tire burst monitoring state, setting the sending period of the tire condition detection apparatus to be T3, T3 being less than T2; on the basis of the change of the tire pressure sampling values, determining whether a second set condition is satisfied; and if the second set condition is satisfied, the tire condition detection apparatus outputting a tire burst alarm flag bit. The present tire condition monitoring method and tire condition detection apparatus can achieve the function of rapid tire burst monitoring.

## Description

### Technical Field

The present application mainly relates to the technical fields of autonomous driving technology, and in particular to a tire condition monitoring method and tire condition detection apparatus.

### Background

Tire condition monitoring systems are safety systems that ensure the proper functioning of vehicles, as a legally mandated feature, tire condition monitoring systems have seen rapid development in the automotive market in recent years. Because it can monitor the real-time condition of vehicle tires, it can promptly warn the driver when abnormal conditions such as tire leaks or overheating occur, thus minimizing tire damage and providing a strong guarantee for safe vehicle operation. However, the number of accidents caused by tire blowouts due to various reasons remains high every year, posing a huge threat to life and causing property losses to society and individuals.

Tire blowout is the phenomenon of a car tire losing most of its air in a very short time, and it is the most dangerous situation a tire can experience, when a tire blows out, the car's operating state changes drastically, if timely braking or steering control is not performed, the car may veer, roll over, or fishtail, tire blowouts pose a serious threat to vehicle safety; therefore, researching on tire blowout warning and control is of great significance to the overall vehicle safety function.

When a tire blowout occurs while a vehicle is in motion, according to vehicle dynamics, there is a very short time between the onset of the blowout and the resulting loss of control and a rapid change in the vehicle's operating state, human intervention often misses this window of opportunity, leading to an accident. Therefore, how to enable the vehicle to promptly receive information about a tire blowout and quickly implement an automatic emergency response to protect vehicle safety is a pressing problem that needs to be solved.

### Summary

The technical problem to be solved by the present application is to provide tire condition monitoring method and tire condition detection apparatus, which can realize rapid collection of tire pressure in a low-power consumption mode, determining whether a tire blowout occurs according to the drop in tire pressure, and thereby achieve the function of rapid tire blowout monitoring.

Specifically, the present application provides a tire condition monitoring method, applicable to a tire condition detection apparatus, the tire condition detection apparatus is used to periodically detect a tire condition and transmit detection data outward, the tire condition monitoring method comprises the following steps:
in an operating state, setting a sampling period of the tire condition detection apparatus to T1, and setting a sending period thereof to T2; the tire condition detection apparatus determining whether a variation of tire pressure sampling values satisfies a first set condition, and if the first set condition is satisfied, the tire condition detection apparatus entering a tire burst monitoring state;
in the tire burst monitoring state, setting the sending period of the tire condition detection apparatus to T3, T3 < T2, the tire condition detection apparatus determining whether a variation of tire pressure sampling values satisfies a second set condition, and if the second set condition is satisfied, the tire condition detection apparatus outputting a tire burst alarm flag bit.

According to one embodiment of the present application, the first set condition comprises:
a difference between the tire pressure sampling values of a current sampling period and the tire pressure sampling value sent in a previous sending period is less than or equal to a first threshold a.

According to one embodiment of the present application, -30kPa≤the first threshold a≤-7kPa.

According to one embodiment of the present application, the second set condition comprises:
condition 1, a difference between the tire pressure sampling value of m1 times consecutive sampling periods and the tire pressure sampling value of a previous sampling period is less than or equal to a second threshold b;
if satisfying condition 1, then the second set condition is deemed to be satisfied.

According to one embodiment of the present application, the second threshold b≤-7kPa, m1 is a natural number and m1 ≤ 4.

According to one embodiment of the present application, the second set condition further comprises:
condition 2, a difference between the tire pressure sampling value of a current sampling period and the tire pressure sampling value sent in last sending period T2 before the tire condition detection apparatus entering the tire burst monitoring state is less than or equal to a third threshold c;
if satisfying condition 1, then determining whether condition 2 is satisfied; if satisfying condition 2 simultaneously, then considering satisfying the second set condition.

According to one embodiment of the present application, the third threshold c ≤-40kPa.

According to one embodiment of the present application, if satisfying condition 1, then determining whether condition 2 is satisfied; if condition 2 is not satisfied, then waiting for m2 sampling periods T1;
if condition 2 is satisfied within m2 sampling periods, then considering satisfying the second set condition.

According to one embodiment of the present application, the third threshold c ≤-40kPa, m2 is a natural number and m2 ≤ 4.

The present application also provides a tire condition detection apparatus, for implementing the tire condition monitoring method according to claim 1, wherein the tire condition detection apparatus comprises:
a sampling module, collecting tire pressure based on the sampling period T1, obtaining the tire pressure sampling values;
a sending module, sending the tire pressure sampling values based on the sending period T2, sending the tire pressure sampling values based on sending period T3, or sending the burst alarm flag bit;
a comparison module, comparing variations of the tire pressure sampling values;
a first judgement module, judging whether satisfying the first set condition based on a comparison result of the comparison module;
a second judgement module, judging whether satisfying the second set condition based on a comparison result of the comparison module.

The present invention provides tire condition monitoring method and tire condition detection apparatus, which enable the tire condition monitoring device to switch from an operating state to a tire burst monitoring state, during this process, the sampling period T1 maintains appropriately, and adjusting the sending period T2 to a sending period T3 to increase the transmission frequency, thereby enabling tire pressure rapid collection in the low-power consumption mode, when a tire pressure change occurs at the moment of tire burst, the system enters the tire burst monitoring state and continuously monitors variations of tire pressure, through sending period T3 it enables rapid external output of the burst alarm flag bit, so as to implement the function of rapid tire burst monitoring, and the entire vehicle can timely receive the tire burst alarm information and execute an emergency automatic response rapidly, thereby achieving the purpose of vehicle safety protection.

It should be understood that the foregoing general description and the following detailed description of the present application are exemplary and explanatory, and are intended to provide further explanation of the present invention as claimed in the claims.

### Brief Description of the Drawings

The drawings are included to provide a further understanding of the present application, and they are included and constitute a part of the present application, the drawings show the embodiments of the present application, and serving to explain the principles of the present application together with the description. In the drawings:
Fig. 1 is a structural schematic diagram of vehicle assembly according to an embodiment of the present invention.
Fig. 2 is a flowchart schematic diagram of a tire condition monitoring method according to an embodiment of the present invention.
Fig. 3 is a schematic diagram of tire pressure sampling data with a sampling period T1 of 50ms.
Fig. 4A is a first schematic diagram of tire pressure changes with a sampling period T1 of 50ms after a tire burst occurs.
Fig. 4B is a second schematic diagram of tire pressure changes with a sampling period T1 of 50ms after a tire burst occurs.
Fig. 4C is a third schematic diagram of tire pressure changes with a sampling period T1 of 50ms after a tire burst occurs.
Fig. 4D is a fourth schematic diagram of tire pressure changes with a sampling period T1 of 50ms after a tire burst occurs.
Fig. 5A is a first schematic diagram of tire pressure values changes with a sampling period T1 of 50ms when passing through a bumpy road surface.
Fig. 5B is a second schematic diagram of tire pressure value changes with a sampling period T1 of 50ms when passing through a bumpy road surface.
Fig. 6 is a structural schematic diagram of a tire condition detection device according to an embodiment of the present invention.

### Preferred Embodiment of the Present Application

It should be noted that, without conflict, the embodiments and the features in the embodiments of the present application can be combined with each other.

The technical solutions in the embodiments of the present application will be clearly and completely described below in conjunction with the drawings in the embodiments of the present application. Obviously, the described embodiments are parts of the embodiments of this application, but not all of them. Based on the embodiments in the present application, all other embodiments obtained by persons of ordinary skill in the art without making creative efforts belong to the protection scope of the present application.

It should be noted that the terms used herein are only for describing specific embodiments, and are not intended to limit the exemplary embodiments according to the present application. As used herein, unless the context clearly dictates otherwise, singular forms are also intended to include plural forms, in addition, it should be understood that when the terms "contain" and/or "include" are used in this specification, they indicate the presence of features, steps, operations, devices, components and/or combinations thereof.

The relative arrangements of components and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may not be discussed in detail, but where appropriate, such techniques, methods and devices should be considered part of the authorized specification. In all embodiments shown and discussed herein, any specific values should be construed as illustrative only, and not as limiting. Therefore, other examples of the exemplary embodiment may have different values. It should be noted that like numerals and letters denote like items in the following figures, therefore, once an item is defined in one figure, it does not require further discussion in subsequent drawings.

In the description of the present application, it should be understood that orientation words such as "front, back, up, down, left, right", " landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application; the orientation words "inside and outside" refer to inside and outside relative to the outline of each part itself.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

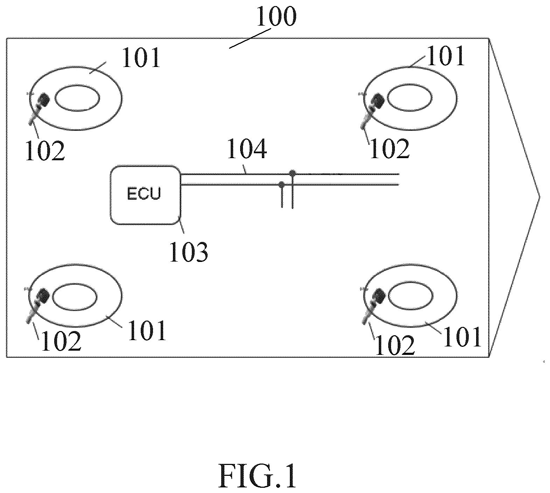

Fig. 1 is a structural schematic diagram of vehicle assembly according to an embodiment of the present invention. As shown in the figure, taking a four-wheeled vehicle as an example, a tire condition detection apparatus 102 is installed inside each of the four tires 101 of the vehicle body 100, which is mainly used to collect information such as tire pressure and send it outward. Correspondingly, a signal receiving and processing unit (ECU) 103 is arranged on the side of the vehicle body 100. The tire condition detection apparatus 102 is usually internally provided with a pressure detection sensor and a power supply module, and the power supply module is a built-in battery. The pressure detection sensor periodically detects the internal air pressure of the tire 101, and the tire condition detection apparatus 102 sends detection information to the signal receiving and processing unit 103 through wireless signals. When the tire 101 occurs a tire burst, the tire condition detection apparatus 101 responds quickly by detecting the air pressure change of the tire 101, and sending out tire burst information in a timely manner through wireless signals, and the signal receiving and processing unit 103 transmits the information to the entire vehicle through the CAN bus 104 after receiving it.

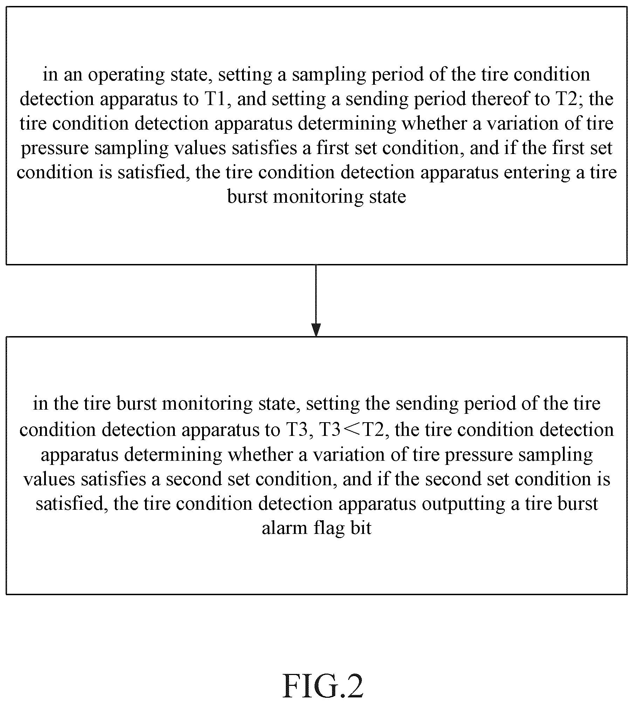

Fig. 2 is a flowchart of a tire condition monitoring method according to an embodiment of the present invention. As shown in the figure, the application provides a tire condition monitoring method, applicable to a tire condition detection apparatus, the tire condition detection apparatus is used to periodically detect a tire condition and transmit detection data outward, the tire condition monitoring method comprises the following steps:
in an operating state, setting a sampling period of the tire condition detection apparatus to T1, that is, the period for collecting tire pressure is T1; a sending period thereof is T2, that is, the period for transmitting the collected signals is T2. The tire condition detection apparatus determining whether a variation of tire pressure sampling values satisfies a first set condition, and if the first set condition is satisfied, the tire condition detection apparatus entering a tire burst monitoring state.

It should be noted that, in the prior art, the collection period of the tire condition detection apparatus is generally set to 1s - 30s, and the sending period is set to 30s - 60s. This is mainly limited by the small size and light weight of the pressure detection sensor, which is powered by a 2032 button cell with limited battery power. There is a contradiction between pursuing timely data update and ensuring service life. At present, vehicle manufacturers require the service life of pressure detection sensors to reach 10 years, if a large-capacity battery is selected, although the collection and transmission frequency can be improved, the cost will increase greatly. Therefore, it is very important to select an appropriate sampling period and sending period to reduce the power consumption of the tire condition detection apparatus. When the vehicle travels normally, the collection period is set to 30s and the sending period is set to 60s as configuration parameters, evaluating on a driving time of two hours per day, and a service life of 10 years can be easily achieved. While according to the time requirement for tire burst response (defining the response time as the time from the occurrence of a tire burst to the vehicle receiving the tire burst information), most vehicle manufacturers require this response time to be within 300ms. If the tire pressure sampling period remains unchanged at 1s - 30s, it cannot meet the requirement for the tire burst response time. If maintaining a short sending period of 300ms, it will be restricted by power consumption and service life. Therefore, in the present application, to meet the time requirement for tire burst response, the sampling period T1 is set to 20ms - 100ms (compared with traditional pressure sensors, the tire pressure sampling period is faster); Setting the sending period T2 to 30s - 60s, consistent with that of traditional pressure sensors. By judging the change in tire pressure, the tire condition detection apparatus enters a tire burst monitoring state, thereby adjusting the sending period to meet the requirements of tire burst response time.

Further, in the tire burst monitoring state, keeping the sampling period T1 unchanged, setting the sending period of the tire condition detection apparatus to T3, and T3 is much smaller than T2. The sending period T3 is preferably set to 50ms - 150ms. The tire condition detection apparatus determining whether a variation of tire pressure sampling values satisfies a second set condition, and if the second set condition is satisfied, the tire condition detection apparatus outputting a tire burst alarm flag bit.

It is easy to understand that the tire condition monitoring method provided by the present application enables the tire condition detection apparatus to switch from the normal operating state to the tire burst monitoring state and reducing the sending period, thereby satisfying the requirement of tire burst response time under low power consumption.

Preferably, the first set condition is: a difference between the tire pressure sampling value P_Cur of a current sampling period and the tire pressure sampling value P_Tx sent in a previous sending period is less than or equal to a first threshold a. If satisfying the first set condition, indicating that the tire pressure drops significantly, and the tire condition detection apparatus enters a tire burst monitoring state. More preferably, -30kPa≤the first threshold a≤-7kPa. The first threshold a is mainly used to determine whether the tire pressure changes, when a change occurs, the tire condition detection apparatus enters the tire burst monitoring state and then increases the transmission frequency (sending period), and can send the tire pressure value to the vehicle in real time. The value of the first threshold a is affected by air pressure sampling accuracy and tire pressure variation during normal driving. In view of tire burst monitoring requirements, and according to the physical characteristics of air pressure variation during a tire burst, the first threshold a is set to a negative value. If setting too large of the value (absolute value), the system will hardly enter the tire burst monitoring state; if setting too small, the apparatus will frequently switch into the monitoring state, resulting in excessive power consumption and seriously shortening the overall service life of the product.

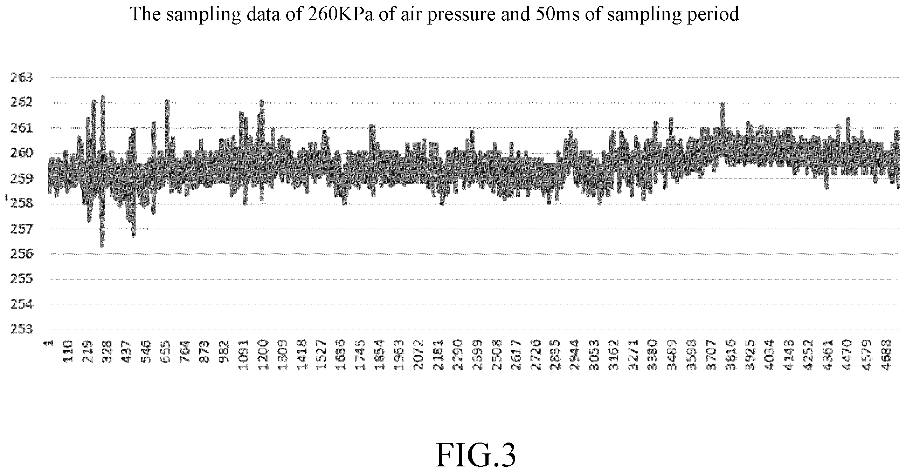

Fig. 3 shows a schematic diagram of tire pressure sampling data with a sampling period T1 of 50ms. As shown in the figure, equipping a tire fitted with a 19-inch rim and inflating to 260kPa and then it drives under normal conditions. The detected air pressure values are output by sampling and detection at 50ms intervals. In the figure, the horizontal axis represents sampling time, and the vertical axis represents tire pressure value, according to the curve, the detected tire pressure fluctuates within a reasonable range. The setting of the first threshold a needs to take this fluctuation into account to avoid false frequent triggering. The total duration of air pressure change after a tire burst relates to the burst aperture and air pressure. Taking a 155R12C tire inflated to 220kPa as an example; when the flow cross-section diameter is 10 mm, the tire burst duration is approximately 1.6s; when the flow cross-section diameter is 15 mm, the tire burst duration is approximately 0.6s; when the flow cross-section diameter is 20mm, the tire burst duration is approximately 0.3s; when the flow cross-section diameter is 25 mm, the tire burst duration is approximately 0.16s.

The theoretical model of tire pressure variation is expressed by the following formula: $ΔP = Δ {n}_{i} {R}_{i} T = \frac{{S}_{t} {V}_{a}}{M {V}_{t}} ∗ {ρ}_{a} {R}_{i} T Δ t$

Wherein, *nᵢ* is the gas variation inside the tire; *Rᵢ*=8.31441J/(mol*K), is the thermodynamic constant of air; *T* is the thermodynamic temperature of gas; *Sₜ* is the flow cross-sectional area of the tire; *Vₐ* is the gas flow velocity; *ρₐ* is the gas density; M=0.029kg/mol, is the molar mass of air; *Vₜ* is the gas volume inside the tire carcass; △t is the time variation.

Once determining the tire and ambient conditions, △P / △t is positively correlated only with *Sₜ* and *Vₐ*, that is, the larger the leakage aperture, the shorter the total air leakage time and the greater the air pressure drop per unit time. It can be seen from the air pressure variation curves of different cross-sectional diameters that the pressure drop rate reaches its maximum at the instant of tire burst; as the overall air pressure decreases, the air leakage rate gradually slows down. According to the air pressure variation curve during tire burst and the fluctuation of air pressure sampling, setting the range of -30kPa≤the first threshold a≤-7kPa to ensure the effectiveness and timeliness of tire burst response.

Preferably, the second set condition comprises:
condition 1, a difference between the tire pressure sampling value of m1 times consecutive sampling periods and the tire pressure sampling value of a previous sampling period is less than or equal to a second threshold b;
if satisfying condition 1, then the second set condition is deemed to be satisfied, the tire condition detection apparatus outputs a tire burst alarm flag bit.

The second threshold b and the parameter m1 serve as condition 1 set for judging the occurrence of a tire burst. After entering the tire burst monitoring state, the sampling period is T1 and the sending period is T3, at this time, the current sampling value P_Cur and the sampling value P_Former of the previous sampling period are two tire pressure sampling values before and after the sampling period T1. The second threshold b represents the drop value of tire pressure within the time T1 and is a negative value. m1 denotes the number of times that satisfying P_Cur-P_Former≤b, and m1 is a positive integer value; if m1 is 2, it means that the condition P_Cur-P_Former≤b is satisfied for two consecutive times.

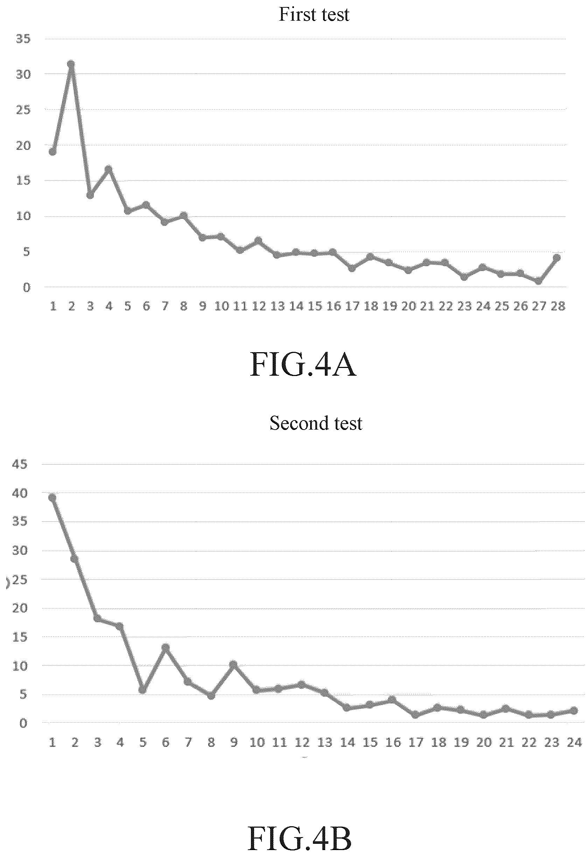

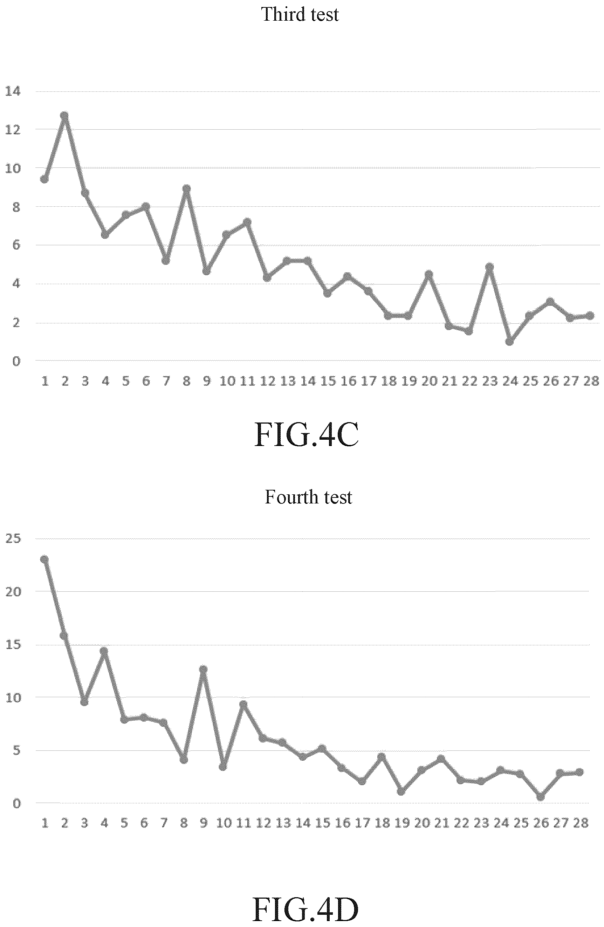

Fig. 4A is a first schematic diagram of tire pressure changes with a sampling period T1 of 50ms after a tire burst occurs. Fig. 4B is a second schematic diagram of tire pressure changes with a sampling period T1 of 50ms after a tire burst occurs. Fig. 4C is a third schematic diagram of tire pressure changes with a sampling period T1 of 50ms after a tire burst occurs. Fig. 4D is a fourth schematic diagram of tire pressure changes with a sampling period T1 of 50ms after a tire burst occurs. Figures 4A to 4D record the results of four tests, when the tire was inflated to 270 kPa, it conducts an actual tire burst test, with the sampling period T1 set to 50 ms, and recording the tire pressure variation curves before and after the burst. In the figures, the horizontal axis represents the sampling times, and the vertical axis represents the tire pressure variation value of each time (P_Cur-P_Former). It can be seen that the pressure change rate is relatively large in the first several times tire bursts, and then gradually slows down.

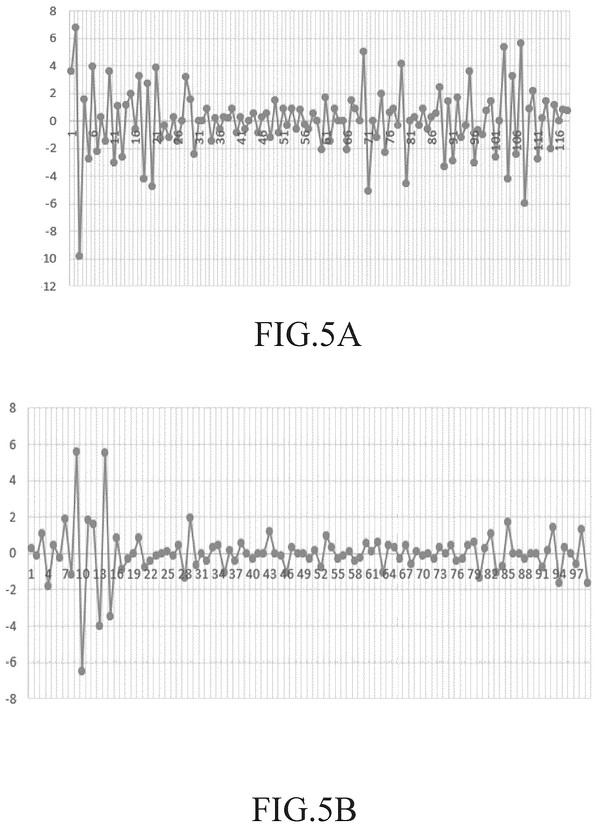

It is also necessary to take into account the short-term pressure changes of the tire caused by driving on bumpy road surface or external impact. Fig. 5A is a first schematic diagram of tire pressure values changes with a sampling period T1 of 50ms when passing through a bumpy road surface. Fig. 5B is a second schematic diagram of tire pressure value changes with a sampling period T1 of 50ms when passing through a bumpy road surface. Figures 5A and 5B record the results of two tests. The horizontal axis denotes the sampling times, and the vertical axis denotes the tire pressure variation value for each time. As shown in the figure, when a tire passes over a bumpy road surface or is subjected to impact and bears force for a short time, the tire pressure will first rise and then drop, and such impact duration is generally relatively transient. From the sampled data, when the sampling period is 50 ms, the variation value is generally positive (pressure rise) first, then negative (pressure drop), and finally remains stable, and it is hard to present a continuous downward trend. The problem of abnormal tire pressure changes caused by passing over pits or external impacts can be avoided by adopting the judgment requirement of continuous pressure drop.

Considering comprehensively of the tire pressure variations caused by tire burst and passing on bumpy road surface, the second threshold b and the parameter m1 are served as condition 1 for determining the occurrence of tire burst. If the value of m1 is set excessively large, it will affect the output response time of the tire burst state. Therefore setting the second threshold b≤-7kPa, m1 is a natural number and m1 ≤ 4, preferably, the second threshold b=-7kPa, m1=2.

Preferably, the second set condition further comprises:
condition 2, a difference between the tire pressure sampling value P_Cur of a current sampling period and the tire pressure sampling value P_Tx0 sent in last sending period T2 before the tire condition detection apparatus entering the tire burst monitoring state is less than or equal to a third threshold c;
if satisfying condition 1, then determining whether condition 2 is satisfied; if satisfying condition 2 simultaneously, then considering satisfying the second set condition.

To ensure the reliability of the output of the burst alarm flag bit, setting condition 2. On the premise of satisfying condition 1, it is also required to meet P_Cur- P_Tx0≤the third threshold c. That is, in the tire burst monitoring state, only when condition 2 corresponding to the tire pressure variation is satisfied, the burst alarm flag bit can be output externally. More preferably, the third threshold c≤-40kPa.

Optionally, if satisfying condition 1, then determining whether condition 2 is satisfied; if condition 2 is not satisfied, then waiting for m2 sampling periods T1;
if condition 2 is satisfied within m2 sampling periods, then it considers satisfying the second set condition.

Since some special circumstances may lead to a relatively slow pressure drop rate of the tire pressure, to avoid missing alarms, sampling period waiting mechanism is set, and the waiting duration is m2 sampling periods T1. That is, for the case where satisfying condition 1 but not satisfying condition 2 simultaneously, updating P_Cur of the tire pressure value sampled next time, and then determining whether P_Cur-P_Tx0≤the third threshold c; Within the m2 waiting periods, if there exists a case where both condition 1 and condition 2 are satisfied simultaneously, then outputting the burst alarm flag bit; otherwise, restarting the judgment of condition 1. More preferably, the third threshold c≤-40kPa, m2 is a natural number and m2 ≤ 4. Preferably, the third threshold c=-40kPa and m2=2. It should be noted that once determining the tire pressure variation complies with the alarm output condition, the burst alarm flag bit will be immediately output without waiting for the next sending period.

It is easy to understand that the tire condition detection apparatus can be configured to exit the tire burst monitoring state. For example, when neither the first threshold a nor the second threshold b is satisfied, the tire condition detection apparatus may exit the tire burst monitoring state after performing n times of data sampling and switch back to the operating state, and the sending period changes from T3 to T2 to reduce power consumption. n is a preset integer, and its duration can be set to an integer that is multiple times of the sampling period T1, like 2 seconds.

Theoretically calculated, setting the air pressure sampling period T1 of the tire condition detection apparatus during driving the vehicle to 50 ms, t0 is the first sampling moment, and observing the change of events starting from t0. Assuming a tire burst event occurs during the period from t0-t1, and abnormal variation of tire pressure is confirmed at time t1, verifying condition 1 at time t2 and t3; and verifying condition 2 at time T3. When satisfying the set conditions, the calculation of the total tire burst response time is as follows:
S1: The time from the occurrence of the tire burst event to the output of the burst alarm flag bit by the tire condition detection apparatus < 150 ms (t0~t3).
S2: Regarding the wireless signal transmission time of the tire condition detection apparatus, since the signal receiving and processing unit is arranged on the vehicle body side, the transmission distance is relatively short, the entire vehicle is generally within 5 meters, and the transmission time from the tire condition detection apparatus to the signal receiving and processing unit can be neglected.
S3: The processing time of the signal receiving and processing unit is determined by the transmission baud rate and MCU, with an overall time generally less than 20ms.

Through theoretical calculation, the total time from the occurrence of the tire burst event to the output of the tire burst state at the signal receiving and processing unit is within 170 ms. If Condition 2 needs to be verified at time t4 and t5, adding 100ms. The tire burst state can be output within 270 ms, thereby meeting the design requirement of a 300 ms tire burst response time.

Through actual vehicle tests, when the vehicle travels at a speed above 60 km/h and passes the tire burst detection apparatus to trigger a tire burst event, the ABS jitter of the whole vehicle is taken as a reference for determining the occurrence time of the tire burst. Calculating response time by waiting for the reception of the tire burst state signal. By adopting the tire condition monitoring method of the present application, the tire burst response time meets the expectation and satisfies the overall requirement of outputting the tire burst state within 300 ms.

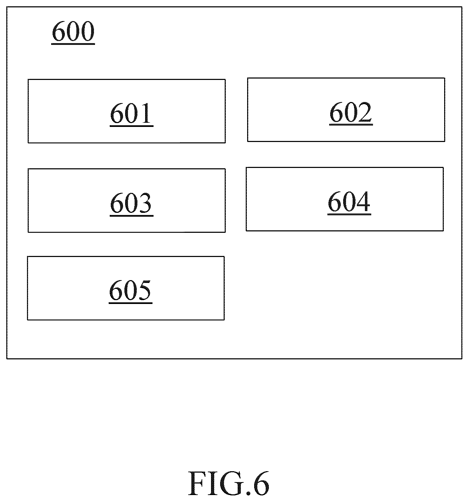

Fig. 6 is a structural schematic diagram of a tire condition detection device according to an embodiment of the present invention. As shown in the figure, the present application also provides a tire condition detection apparatus 600, for implementing the above-mentioned tire condition monitoring method, wherein the tire condition detection apparatus comprises:
a sampling module 601, collecting tire pressure based on the sampling period T1, obtaining the tire pressure sampling values. The sampling module can be a pressure monitoring sensor.
a sending module 602, sending the tire pressure sampling values based on the sending period T2, or sending the tire pressure sampling values based on sending period T3, or sending the burst alarm flag bit;
a comparison module 603, comparing variations of the tire pressure sampling values;
a first judgement module 604, judging whether satisfying the first set condition based on a comparison result of the comparison module 603;
a second judgement module 605, judging whether satisfying the second set condition based on a comparison result of the comparison module 603.

Wherein, for the specific implementation manner and technical effects of the tire condition detection apparatus 600, reference may be made to the foregoing embodiments of the tire condition monitoring method provided by the present application, which will not be repeated herein.

It will be apparent to those skilled in the art that various modifications and variations may be made to the above exemplary embodiments of the present application without departing from the spirit and scope thereof. Accordingly, the present application is intended to cover all modifications and variations falling within the scope of the appended claims and their equivalent technical solutions.

## Claims

1. A tire condition monitoring method, applicable to a tire condition detection apparatus, the tire condition detection apparatus is used to periodically detect a tire condition and transmit detection data outward, the tire condition monitoring method comprises the following steps:
in an operating state, setting a sampling period of the tire condition detection apparatus to T1, and setting a sending period thereof to T2; the tire condition detection apparatus determining whether a variation of tire pressure sampling values satisfies a first set condition, and if the first set condition is satisfied, the tire condition detection apparatus entering a tire burst monitoring state;
in the tire burst monitoring state, setting the sending period of the tire condition detection apparatus to T3, T3 < T2, the tire condition detection apparatus determining whether a variation of tire pressure sampling values satisfies a second set condition, and if the second set condition is satisfied, the tire condition detection apparatus outputting a tire burst alarm flag bit.

2. The tire condition monitoring method according to claim 1, **characterized in that**, the first set condition comprises:
a difference between the tire pressure sampling values of a current sampling period and the tire pressure sampling value sent in a previous sending period is less than or equal to a first threshold a.

3. The tire condition monitoring method according to claim 2, **characterized in that**, -30kPa≤the first threshold a≤-7kPa_{∘}

4. The tire condition monitoring method according to claim 1, **characterized in that**, the second set condition comprises:
condition 1, a difference between the tire pressure sampling value of m1 times consecutive sampling periods and the tire pressure sampling value of a previous sampling period is less than or equal to a second threshold b;
if satisfying condition 1, then the second set condition is deemed to be satisfied.

5. The tire condition monitoring method according to claim 1, **characterized in that**, the second threshold b≤-7kPa, m1 is a natural number and m1 ≤ 4.

6. The tire condition monitoring method according to claim 4, **characterized in that**, the second set condition further comprises:
condition 2, a difference between the tire pressure sampling value of a current sampling period and the tire pressure sampling value sent in last sending period T2 before the tire condition detection apparatus entering the tire burst monitoring state is less than or equal to a third threshold c;
if satisfying condition 1, then determining whether condition 2 is satisfied; if satisfying condition 2 simultaneously, then considering satisfying the second set condition.

7. The tire condition monitoring method according to claim 6, **characterized in that**, the third threshold c≤-40kPa.

8. The tire condition monitoring method according to claim 7, **characterized in that**, if satisfying condition 1, then determining whether condition 2 is satisfied; if condition 2 is not satisfied, then waiting for m2 sampling periods T1;
if condition 2 is satisfied within m2 sampling periods, then considering satisfying the second set condition.

9. The tire condition monitoring method according to claim 8, **characterized in that**, the third threshold c≤-40kPa, m2 is a natural number and m2 ≤ 4.

10. A tire condition detection apparatus, for implementing the tire condition monitoring method according to claim 1, wherein the tire condition detection apparatus comprises:
a sampling module, collecting tire pressure based on the sampling period T1, obtaining the tire pressure sampling values;
a sending module, sending the tire pressure sampling values based on the sending period T2, sending the tire pressure sampling values based on sending period T3, or sending the burst alarm flag bit;
a comparison module, comparing variations of the tire pressure sampling values;
a first judgement module, judging whether satisfying the first set condition based on a comparison result of the comparison module;
a second judgement module, judging whether satisfying the second set condition based on a comparison result of the comparison module.
